# EUROPEAN PATENT APPLICATION

(11) **EP 0 796 654 A2**
(43) Date of publication of application: **24.09.1997**
(21) Application number: 97104886.3
(22) Date of filing: 21.03.1997
(51) Int. Cl.: B01J 19/00

(54) **Information management system for automated multiple simultaneous synthesis**

(30) Priority: 22.03.1996 US 620265
(71) Applicant: WARNER-LAMBERT COMPANY, Ann Arbor, Michigan 48105 (US)
(72) Inventor: Dewitt, Sheila Helen Hobbs, Canton, Michigan 49236 (US); Duffield, Mark J., Cambridge, Massachusetts 02139-4809 (US); Hogan, Eleonora M., Ann Arbor, Michigan 48105 (US); Nickell, David Glenn, Ann Arbor, Michigan 48103 (US)
(74) Representative: Mansmann, Ivo

(57) **Abstract**

A system for developing and performing multiple simultaneous synthesis with an array of reaction vessels includes an information management system, an equipment controller interface and responsive equipment such as a liquid handling robot. Equipment may also be supplemented by other reaction peripherals and pick and place robotic equipment controlled by an event scheduler. The preferred information management system includes a design module accessing reagent, corporate chemical and reaction databases, as well as a core module that includes a reaction workbook. The reaction workbook identifies the products to be produced, preferably by the product string of chemical building blocks used to form the product, the solid or solution parameters involved to generate the products, and the selection of reagents required to carry out the reactions. In addition, the reaction workbook organizes the reaction date to guide the equipment controller, preferably for movement relative to an array of multiple reaction vessels in a reactor apparatus.

## Description

### TECHNICAL FIELD

The present invention relates generally to a system for use in multiple simultaneous synthesis of compounds, particularly an information management system for automating the preparation of chemical compounds utilizing chemical synthesis technology.

### BACKGROUND ART

There are various methods and apparatuses known today for use in the multiple simultaneous synthesis of compounds, including organic compounds. For example, it is known in the art that peptides and oligonucleotides may be multiply and simultaneously synthesized utilizing various methods and procedures. It is also known that general organic compounds can be synthesized, although the procedures and apparatuses utilized are often quite different and more versatile than with synthesis of peptides and oligonucleotides. In this regard, the synthesis of general organic compounds often requires such varied conditions as utilization of an inert atmosphere, heating, cooling, agitation and/or an environment to facilitate reflux. Preferred methods and apparatuses for the multiple simultaneous synthesis of organic and other chemical compounds are set forth in U.S. Patent No. 5,324,483.

Chemical synthesis to generate compounds having possible suitability as stable, orally active drug candidates is a highly active field today. There are several methods and procedures which are currently being used to synthesize and/or screen as many chemical compounds as possible to search for new drug candidates. In order to determine the effectiveness of certain compounds in this regard, it is an advantage to be able to produce and screen thousands of chemical compounds as rapidly and accurately as possible. It is also advantageous to perform the synthesis and other processes with minimum manual interaction, and thus with as much automation as possible.

Multiple simultaneous synthesis (also called "parallel synthesis") is typically carried out in an array format which is compatible with standard techniques of organic synthesis. The final compounds are produced individually in soluble form typically on solid supports (for example, resins), although solution techniques can also be utilized. The growing compounds are readily separable from the by-products and reagents. The chemistries utilized encompass a wide variety of organic reactions.

In accordance with U.S. Patent No. 5,324,483, solid supports are contained within a plurality of gas dispersion tubes and the synthesis techniques enable the multiple, simultaneous synthesis of, for example, 8, 40, 100 or more reactions at one time.

The steps necessary to perform a synthesis generally comprise the development of a synthetic route that will be feasible on a solid support or in solution, the verification of resin-based or solution-based synthesis, and the execution of the multiple, simultaneous synthesis within an array format. The method generally involves the sequential coupling of chemical building blocks to form resin-bound or solution-based intermediates until the final compound at each array location is constructed. In addition, coupling agents or reagents are often required to help form the bond between the solid support and the building blocks.

The speed and accuracy of many of the synthesis procedures can be improved through use of a liquid handling robot ("LHR"), such as a robotic sample processor. Much of the information used to direct and perform the synthesis procedures and operate the LHR, however, is generated manually or through use of certain computerized programs. This is still labor intensive and requires significant time and effort.

In particular, the multiple reaction steps and physical processes must be determined and the proper constituents introduced and combined for each position in the array. Moreover, control systems for robots that could transport or mix the reaction compounds at each of the array position locations are subject to logic commands substantially different than the commands which are used by the product technician to create the products to be developed and tested at each position of the array. As a result, known systems have not succeeded in automating the production of testable products in an array without substantial cross training between the technical disciplines of product development and robot control to reduce product creation time.

### SUMMARY OF THE INVENTION

The present invention provides a system for automating multiple simultaneous synthesis of a plurality of compounds, preferably to determine their potential as possible new drug candidates. The present invention is not limited for use only for drug applications, however, and it can be used in any industry which uses chemical synthesis and reactions to develop, test and/or screen new chemical products. For example, the present invention can be used to develop and screen new agricultural agents, dye products, diagnostic reagents, food-related agents, and the like. Also, as to the drug field, the new drug candidates can be for either human or veterinary use. An additional alternative use of the invention is for the optimization of chemical reactions, for example, reaction yields or reaction times, on solid supports or in solution.

The compound development takes place in an array, preferably provided by a reactor apparatus as disclosed in U.S. Patent No. 5,324,483 and incorporated herein by reference, although other known or equivalent reactor apparatuses can be utilized. The reactor is driven automatically by chemical information software integrated with interfacing robot control transformation software to external equipment, for example, robots and reaction implementation modules. The invention expedites synthesis of products with less complications and in a quicker, easier and more efficient manner than with previously known synthesis systems.

Preferably, the system utilizes a method and apparatus for automated synthesis which comprises a plurality of modular components that automate the sequential coupling of building blocks to form intermediates until a production process is performed to produce a compound at each reaction vessel in the array of a reactor apparatus. The coupling of building blocks, the addition of coupling agents or reagents, and the manipulation of the reactions (such as by heating, cooling, agitation, etc.) are implemented automatically by equipment such as liquid handling robots or other robotic apparatus, responsive to the sequential coupling reactions chosen by a trained practitioner. The final compounds are cleaved from the spent resins to yield products for biological assay testing in substantially less time and with more efficiency than would otherwise be required to generate a family of products to be tested.

As a result, the present invention provides a system for providing multiple reaction vessels for the reactions to be performed in the production of test samples for the rapid screening of multiple chemical entities in high through-put biological assays. The present invention also provides software for orienting the practitioner's focus on chemical transformations in automated parallel synthetic reactions rather than on spatial position control of the robotic apparatus associated with a product generating station. As a result, the present invention provides substantially more comprehensive testing and precise creation of desired products than previously known methods including those employing previously known multiple simultaneous synthesis apparatus. The present invention also substantially reduces the amount of documentation and calculations previously needed or utilized by the synthesis practitioner.

In the preferred embodiment, the method includes the steps of creating an array formatted to coincide with a plurality of gas dispersion tubes and reaction wells in a holder block of a reactor apparatus. The synthesis practitioner selects the reagents, the selection becoming interfaced with a source location database with identification of particular reagent solutions and building blocks. By selecting the product structure desired, the resin weight to be provided at each reaction vessel and the product string describing the product, the present invention provides the selection and automatic distribution of reagents and processing steps to be sequentially provided at each reaction vessel. Accordingly, by concentrating on the chemical transformations to be accomplished at each reaction vessel, the present invention automates operation of the external modules without imposing numerical control or robot displacement characteristics on the commands given by the practitioner.

### BRIEF DESCRIPTION OF THE DRAWINGS

The present invention will be more clearly understood by reference to the following detailed description of the preferred embodiment(s) when read in conjunction with the accompanying drawings and appended claims:
FIGURE 1 is a schematic illustration of a multiple simultaneous synthesis system and a multiple parallel synthesis system in accordance with the present invention;
FIGURE 1A depicts a reactor apparatus for use with the present invention;
FIGURE 2 is a flow chart outlining operation of the core module shown in the system of Figure 1;
FIGURE 3 is a flow chart showing process steps in the initialization of a new array in the core module of Figure 2;
FIGURE 4 is a flow chart of process steps for entering reagents to create products automatically with the core module of Figure 2;
FIGURE 5 is a flow chart of process steps for entering products in the core module of Figure 2;
FIGURE 6 is a flow chart of process steps for entering resin parameters in the core module of Figure 2;
FIGURE 7 is a flow chart of process steps for defining reaction parameters in the core module of Figure 2;
FIGURE 8 is a representative screen diagram including an overlay for dialogue with the core module of Figure 2;
FIGURE 9 is a representative screen diagram for a worksheet used in dialogue with the core module of Figure 2;
FIGURES 10a and 10b depict a worksheet similar to Figure 9 but showing additional interface capability for dialogue with a core module of Figure 2;
FIGURE 11 is a representative screen diagram similar to Figures 9 and 10 but showing additional interactive capability for dialogue with the core module of Figure 2; and
FIGURE 12 is a representative screen diagram of a worksheet displaying an instantaneous condition in an array corresponding to a physical reaction of the reactor apparatus for a system shown in Figure 1.

### BEST MODE(S) FOR PRACTICING THE INVENTION

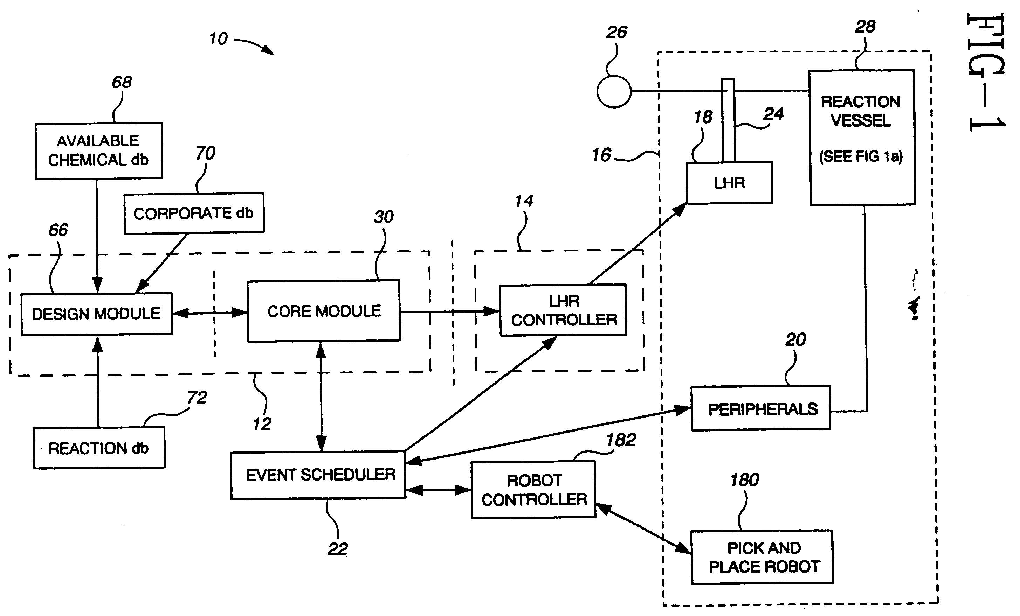

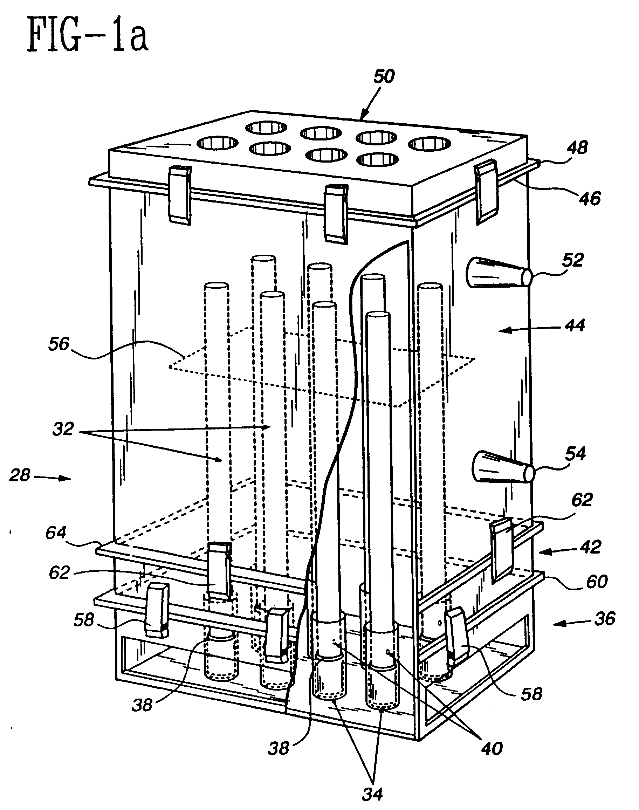

Referring first to Figure 1, the automated multiple simultaneous synthesis system 10 in accordance with the present invention comprises an information management system 12, an interface 14 and physically interacting accessories or equipment 16. In this regard, as used herein, the terms "multiple simultaneous synthesis" and "parallel synthesis" are used interchangeably and refer to the same general system and procedures. On the other hand, the term "multiple parallel synthesis" refers to a system wherein two or more multiple simultaneous synthesis procedures or parallel synthesis procedures are part of an overall system; this is discussed in more detail below with reference to Figure 1 and the use of a "pick and place" robot.

Components in each of the units 12, 14 and 16 in the system 10 are modular to allow individual components to be substituted as needed. For example, in the preferred embodiment, the interactive equipment 16 comprises a liquid handling robot (LHR) 18, for example, a Cyberlab Model C200, although other comparable and equivalent LHR systems could be utilized, such as a Tecan robotic sample processor.

Peripherals 20 provide the capability for more complex processing or coordinated concurrent parallel synthetic reactions operated through an event scheduler 22 to improve utilization of each component in the accessories module 16. Module 16 is described herein for the sake of brevity in terms of the liquid handling robot 18 and its control of the manipulator 24, for example, interfacing between a chemical supply 26 and a reactor or synthesis apparatus 28 used in performing multiple simultaneous synthesis. It will be understood, however, that the exemplary discussion is not limiting and does not restrict the operations that can be performed by the accessories module 16.

Interface module 14 provides a control logic transformation from a core module 30 in the system 12 to the equipment and accessories. For example, the information compiled in the core module 30 may be transformed to computerized numerical control displacement paths of the manipulator 24 (such as the arms of the LHR) that define movements of fluid supply needles on the manipulator 24 that correspond to the positions of the reaction vessels of an array 56 (see Figure 1A) in a reactor or synthesis apparatus 28.

The reactor apparatus 28 preferably is of the type disclosed in U.S. Patent No. 5,324,483, which is concurrently owned by the same assignee as the present invention. The disclosure of the '483 patent is hereby incorporated by reference herein. Other reactor apparatus and synthesis systems could be used with or make use of the present invention, including those of Advanced Chemtech, Affymax, Biotech Instruments, Chiron Corp., Gibson/Abimed, Lindsey, Protein Technologies/Rainin, Rhone-Poulenc, Shimadzu, Takeda, Fuchs/PASS and Zinsser.

In accordance with the '483 patent, and as generally shown in Figure 1A, the reactor or synthesis apparatus 28 preferably used with the present invention includes a plurality of reaction tubes 32 that are each received in a reaction well 34 carried in a reservoir block 36. The lower end of each reaction tube 32 includes a filter 38 and one or more pressure release openings 40. Preferably, the reaction tubes are glass tubes with sintered glass filter bottom portions (also called "PINs") that hold resin-bound building blocks of a product. As used herein, the term "reaction vessel" refers to the physical member or structure in which the chemical synthesis takes place or is carried out for each product to be developed in the reactor apparatus. For example, in accordance with the disclosure of the '483 patent, a "reaction vessel" includes both a PIN (reaction tube) and a reaction well.

The reactor apparatus 28 includes a holder block 42 with a plurality of apertures adapted to receive the reaction tubes 32 above the reservoir block. The apparatus 28 also includes a manifold 44 having an opening at the lower end to receive the array 56 of reaction tubes 32 while the top wall of the manifold 44 contains apertures that register with openings in the reaction tubes 32. The top 46 of the manifold 44 is covered with a gasket 48 held in place by an apertured plate 50 providing a covered access opening to each of the reaction tubes. For example, a fluid carrying needle of the manipulator 24 may penetrate the self-sealing gasket 48 and supply or remove reagent or other materials within the reaction tube 32. In this regard, the gasket may be made of rubber or a rubber-type material (e.g., silicone) which is puncturable with a needle-like object and automatically resealable following the puncture.

Ports 52 and 54 in manifold 44 provide an inlet port and an outlet port, respectively, for changing the atmosphere about the reaction tubes 32. As a result, the reactor 28 provides an array 56 of reaction wells, that can be subjected to various process steps such as agitation, heating, cooling, etc. as desired, in order to conduct multiple simultaneous synthesis as more fully discussed in U.S. Patent No. 5,324,483. Connectors, for example, clips 58, secure the reservoir block 36 to the holding block 42 about a sealing gasket 60, while clips 62 secure the holding reservoir 42 to the manifold 44 about a sealing gasket 64. Fasteners are also used to hold the apertured plate 50 to the top of the manifold. Other mechanisms for holding together the components of the reactor apparatus could also be utilized.

The information management system module 12 comprises a design module 66 interfacing with the core module 30. The design module 66 enumerates a series of compounds based on a common core molecule and a given set of substituents available from a plurality of databases. For example, an available commercial chemical database 68, such as Available Chemical Directory (ACD) by Molecular Design Limited (MDL), a corporate database 70 of chemical structures, and a reaction database 72, such as REACCS by MDL, or Cross-Fire by Beilstein, can be used to define a library of compounds in the design module 66. A corporate database, for example, is data or information accumulated or developed by the company or entity which is utilizing the invention. These compound reactions and reagents are then exported using a common information exchange format, for example a structure data file (SD), or reaction data file (RD) to the core module 30 for use in a "reaction workbook". The chemical directory in a commercially available database, such as the Maybridge database, provides the decisions regarding which compounds are to be made based on several criteria such as availability and cost of the reagents. The design module 66 integrates the information contained in the databases including the particular compounds already available in the corporate repository or database.

As indicated, the reaction workbook of the core module 30 interfaces with the reaction based databases such as MDL's REACCS and Beilstein's Cross-Fire in conjunction with commercially available chemical databases to provide the basis for initializing and performing chemical reactions by the automated synthesis system 10. Data about conditions and generic reagents are downloaded from these databases to the core module 30 via the design module 66. Several commercially available products embody some of the functions of a design module and are incorporated as desired. For example, MDL's Project Library, Tripos' Legion and Selector, the DiverSelector software and the CombinDBMaker may be used as the design modules.

The core module 30 simplifies the organization and coordination of multiple simultaneous synthesis in the array 56 by transforming reaction data to define destination data and maps that correspond to process steps performed in the array 56. The destination data is transported to a robot controller by a defined interface for data transfer, for example, ASCII or SD files, so that the robot is driven by controller data structured according to specific process steps in the array. While the core module 30 may generate a reaction workbook with the transported data in response to downloaded product and reaction data from a design module, the core module may also create a reaction workbook by independent user interaction with a graphical user interface.

The graphical user interface simplifies the practitioner's interaction with the equipment 16 and the available database information. The system user inputs data of the type previously written in a laboratory notebook into the reaction workbook of the core module 30. This data includes lists of the products, the amounts, the number of mols of constituents, the number of equivalents for each reagent, the molecular weights for each reagent, and a description of the procedure to be performed. This data generates control instructions for the robot controller software. At the end of the synthesis, the results of the reaction are recorded, including the percent of yield, the weight of material obtained, and the purity of the material.

In order to drive an automated chemical synthesizer, the reaction workbook formalizes the identification of the scheme for synthetic transformation, the identification of the constituents involved, and the identification of the locations at which each synthesis sample is being transformed. The reaction workbook automatically assigns a destination in the array to each product entered. The key to linking the products with the reagents and the positions in an array is called the "product string". The product string is a concatenation of the reagents used to construct the desired compound and placed in the order that the reagents are used in the reaction sequence and chemical transformation.

The reagents may only be a part of the target molecule temporarily, for example, the resin used in a solid phase reaction. For example, a product string AA,BB:CC:DD would describe the molecule AABBCCDD formed from a three-step reaction. The first step introduces the building blocks AA and BB. As another example, in a four-step solid phase reaction sequence in which a reagent is attached to the resin in the first step and the target molecule is cleaved in the last step, the product string will be AA:BB:CC: None.

In addition, the reaction workbook programming permits the grouping of reagents to improve the efficiency of reagent handling and sorting and reduces time in a logical manner. For example, if two building blocks are used in the first step of synthesis in an array, the array can be logically divided in half with all the reaction vessels in one half receiving one building block while manipulator 24 provides a second building block to the other half. In addition, the array grouping may be a pattern identified by a destination map generated by the reaction workbook.

The reaction workbook can also accommodate different chemical reactions in a single synthesizer unit by linking reagents and solvents to specific building blocks. For example, both acid chlorides and organic acids could be used simultaneously in the same array to introduce different building blocks by linking the necessary reagents to either the acid chloride or the acid. Also, either solid supports (typically a resin) or standard solution techniques can be utilized in the synthesis procedures in accordance with the present invention.

The reaction workbook is implemented in a spreadsheet paradigm, preferably with the chemical structures that graphically represent molecule formation and other information contained in cells. The Product Worksheet will have a place to specify a generic structure and columns for groups to be modified. Molecular weights and formulas can be automatically calculated from the structures of products. Procedures for each reaction of a multiple step sequence can be placed on a separate Reaction worksheet that includes both the representation of the reaction and the chemical structures. Based upon the amount of starting material input, the Reaction spreadsheets will calculate the amount of each reagent needed for each step. For solid phase reactions, the average weight of resin in each reaction vessel along with the resin loading estimation of reactive sites, measured in equivalents per weight, will be used to calculate the number of mols of starting material. Alternatively, the program allows the input of individual weights to be assigned to each reaction vessel. Finally, the program will check to see that the total volume of reagents and solvents added at an individual PIN does not exceed the allowable volume of the reaction well of the array 56.

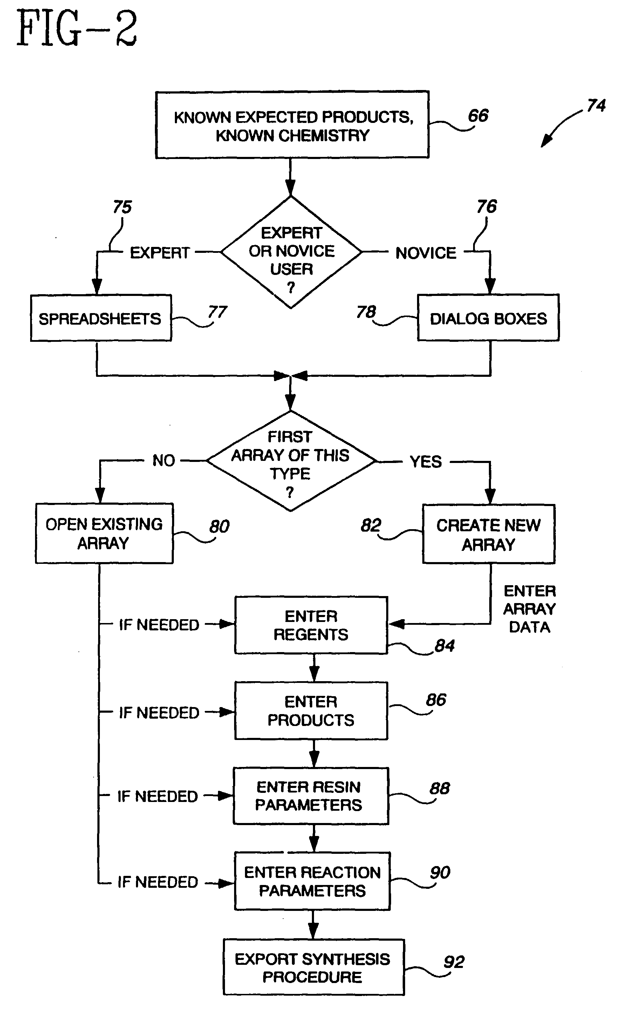

Referring to Figure 2, the general format 74 of the reaction workbook in the core module 30 is shown utilizing input from a design module 66. After a choice of operating levels 75 or 76, spreadsheets 77 or dialogue boxes 78 are used to identify an existing array 80 or to create a new array 82. The user may choose to enter information into the reaction workbook or transport data to the workbook from the design module. When the workbook is open, the user may enter from a menu Reagents as shown at 84, Products as shown at 86, Resin Parameters as shown at 88, and Reaction Parameters as shown at 90. Based on this data, the Export Synthesis Procedure as shown at 92 is generated.

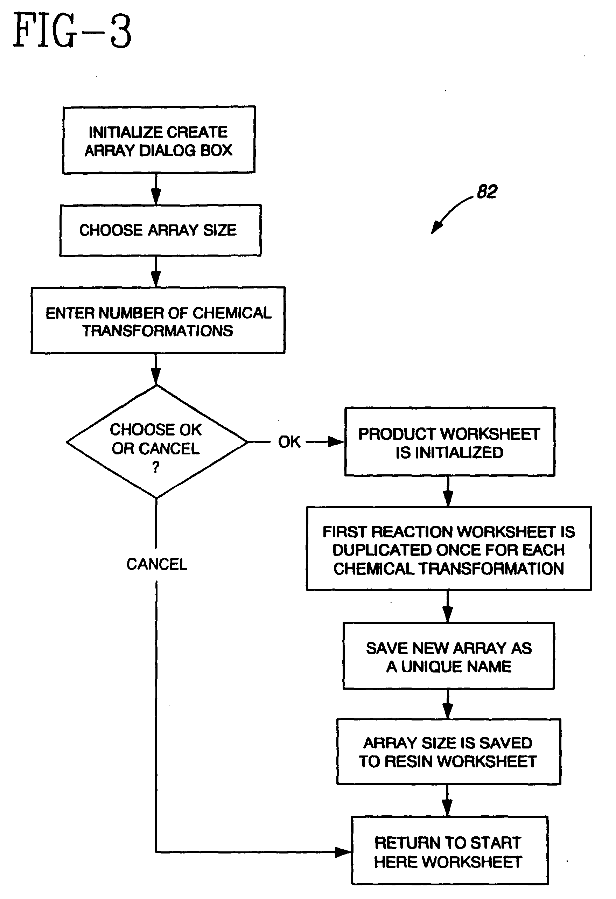

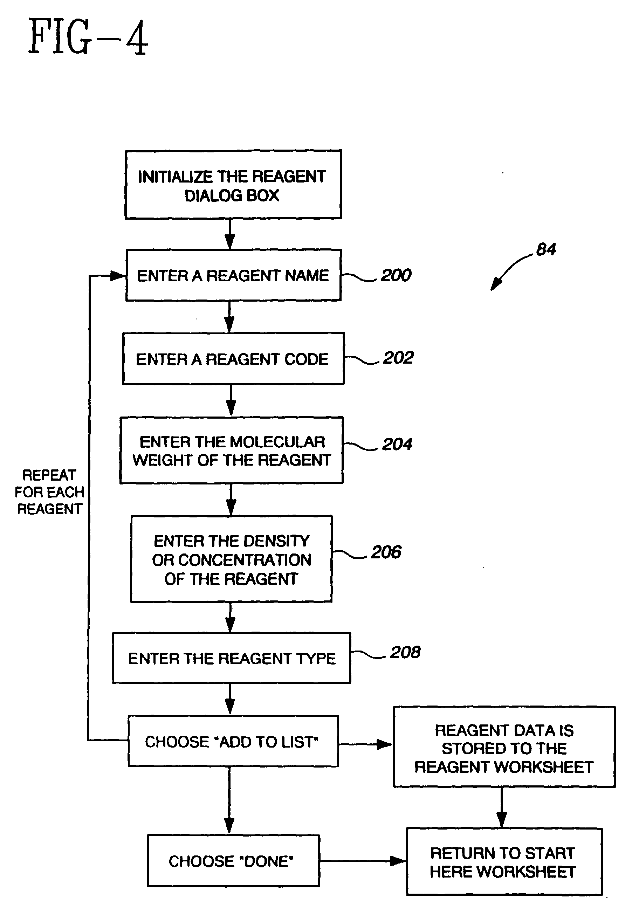

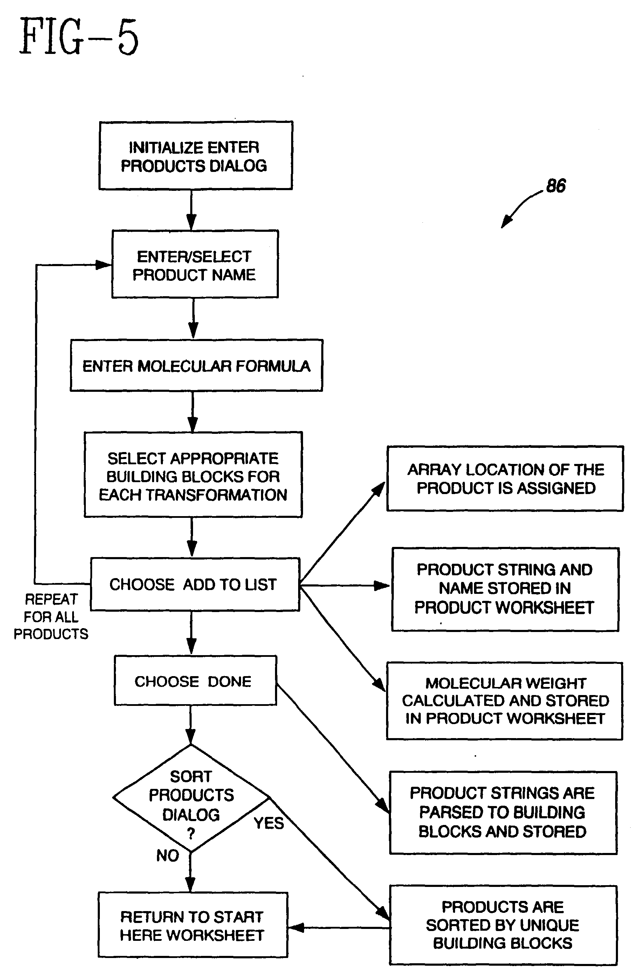

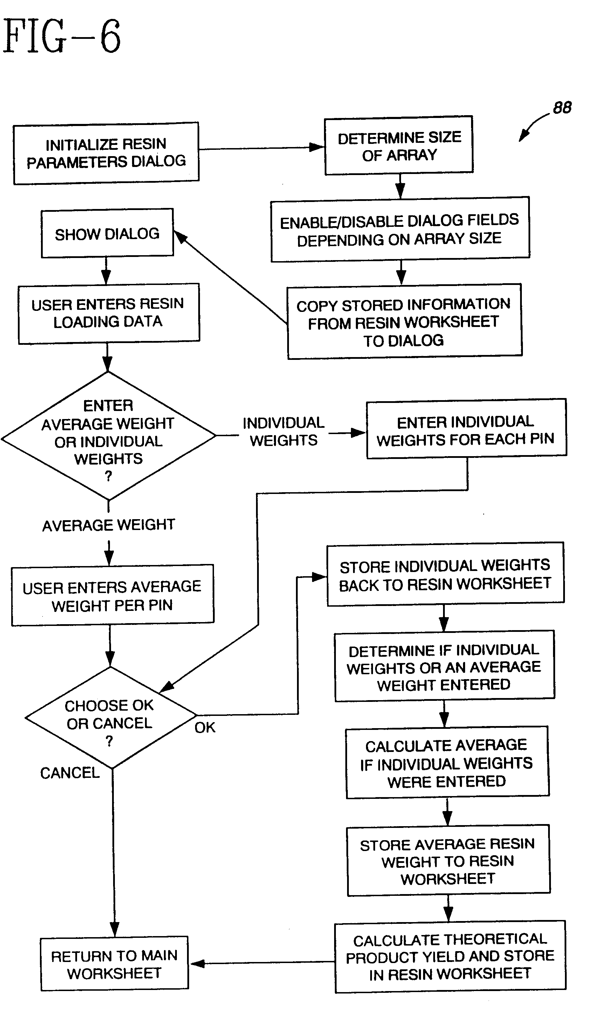

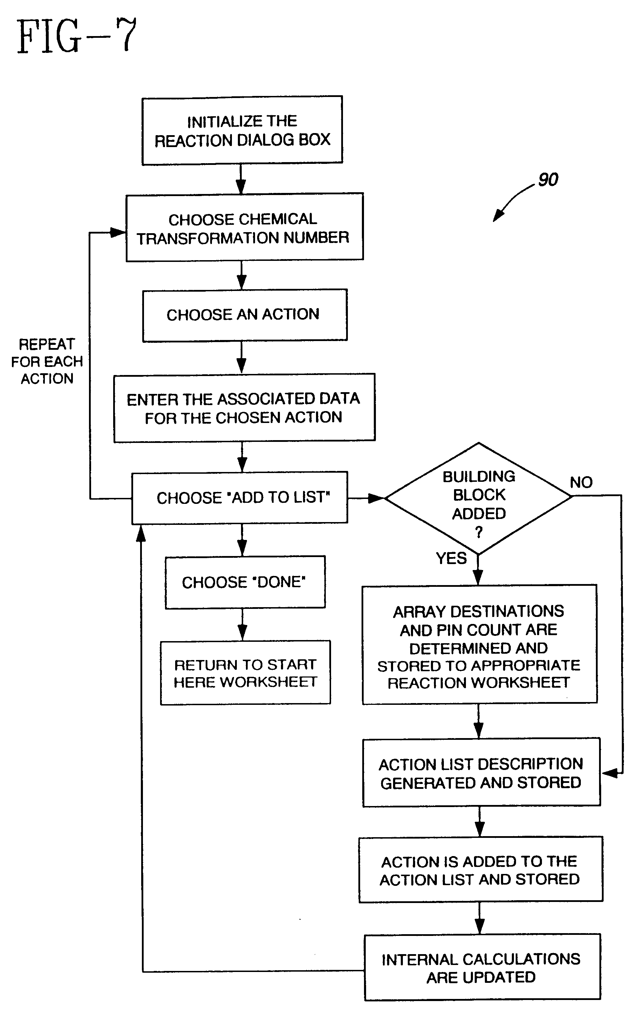

Preferably, the program functions on the menu are accessible from a graphical user interface employed with a computer terminal work station. For example, in the preferred embodiment, Microsoft Excel provides templates developed for accessing functions of the system according to the present invention. The functions of Create New Array 82 (as shown in Figure 3), Enter Reagents 84 (as shown in Figure 4), Enter Products 86 (as shown in Figure 5), Enter Resin Parameters 88 (as shown in Figure 6), and Enter Reaction Parameters 90 (as shown in Figure 7) can be accessed directly from the main menu, for example, by the use of graphic buttons on a computer screen. In addition, steps performed in each of these functions can be accessed through spreadsheet templates identified at the screen portions shown as tabs along the bottom edge of the screen. The buttons or functions can be selected or accessed by use of a touch screen, by the clicking of a mouse, or by the use of a keyboard, depending on the type of computer equipment utilized.

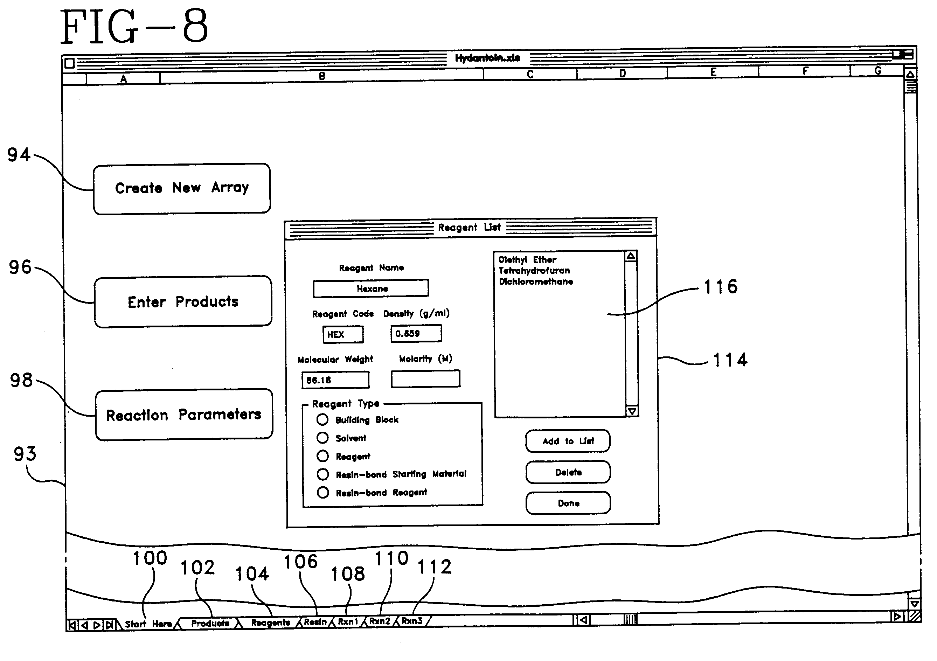

With reference to Figure 8, graphic buttons 94, 96, and 98 are provided on the computer spreadsheet diagram 93 in order to access the Create New Array, Enter Products and Reaction Parameter menus, respectively. The main menu 93 also contains graphic buttons for Create Reagent List and Resin Parameters, but they are covered by the dialogue box shown. Also tabs 100, 102, 104, 106, 108, 110 and 112 on the screen diagram can be used to access worksheets relative to Products, Reagents, Resin and the like.

Upon actuation of Create New Array graphic button 94, a dialogue box requests the user to enter the number of reactions to be involved in the creation of a product, and displays autographic buttons to select the size of the array. In the preferred embodiment, the dialogue box is set up with a selection between an eight PIN and a forty PIN array, although it is to be understood that arrays other than PIN arrays and with different numbers of reaction vessels can be utilized depending upon the products and the reactor apparatus to be utilized. A title for the array is entered and the work product is saved after the worksheets for the reaction workbook are initialized, and the array can be developed using the autographic button functions for worksheets.

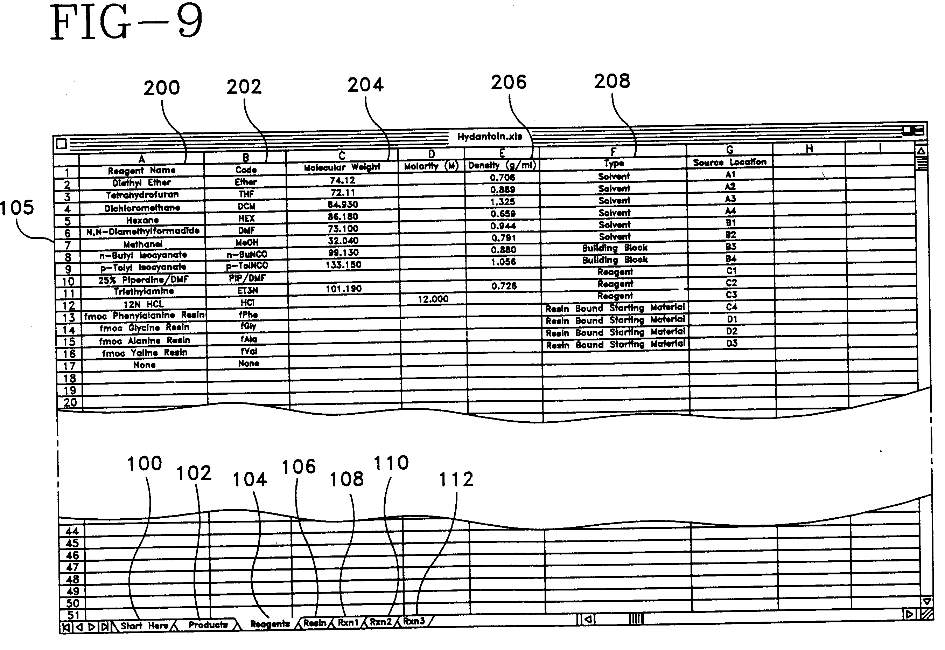

Referring now to Figure 4, the Enter Reagents 84 function of the preferred embodiment includes entering the reagent name 200, reagent code 202, molecular weight of the reagent 204, density or concentration of the reagent 206, preferably molarity, and the type of reagent used 208. A spreadsheet 105 showing this data is shown in Figure 9. In a preferred embodiment, the reagent type is selected from: (a) building blocks that build upon the resin carried in the reaction vessel, (b) solvents that carry or affect but do not join the building blocks, (c) reagents that participate in a reaction but do not end up in the target molecule, (d) resin-bound starting material, and (e) resin-bound reagents. The ease with which reagent selections can be made is shown in Figure 8 in which a dialogue box 114 queries the user for selection of the appropriate constituent. In addition, the box 114 provides a listing window 116 in which a cumulative list of the selected reagent names for an array are added or deleted. The window list corresponds with the reagent data stored in the reagent worksheet 105, depicted by the tab 104 in Figure 8. The source location information is automatically assigned by the program.

The Enter Products function 86 of the preferred embodiment shown in Figure 5 similarly enables the user to select a product name, the molecular formula, and the building blocks for each transformation. In addition, the array location corresponding to the PIN at which the product is to be made is automatically assigned. Also, the product string is entered, and the molecular weight is automatically calculated and stored in the Product worksheet accessible at the lower edge tab 102 in Figure 8. In addition, the product strings are parsed to identify the discrete building blocks and stored. The products may then be sorted by recognition of the unique building blocks required at each array location to build a product at each reaction vessel of the reactor apparatus. Other portions of the worksheet, for example, the chemical structure, can be copied and pasted from another source.

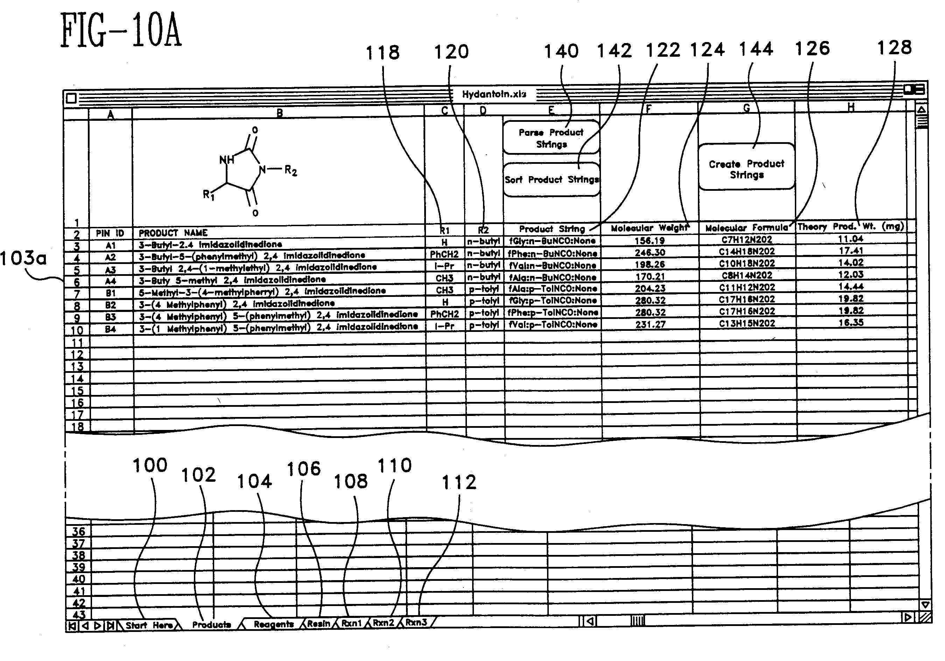

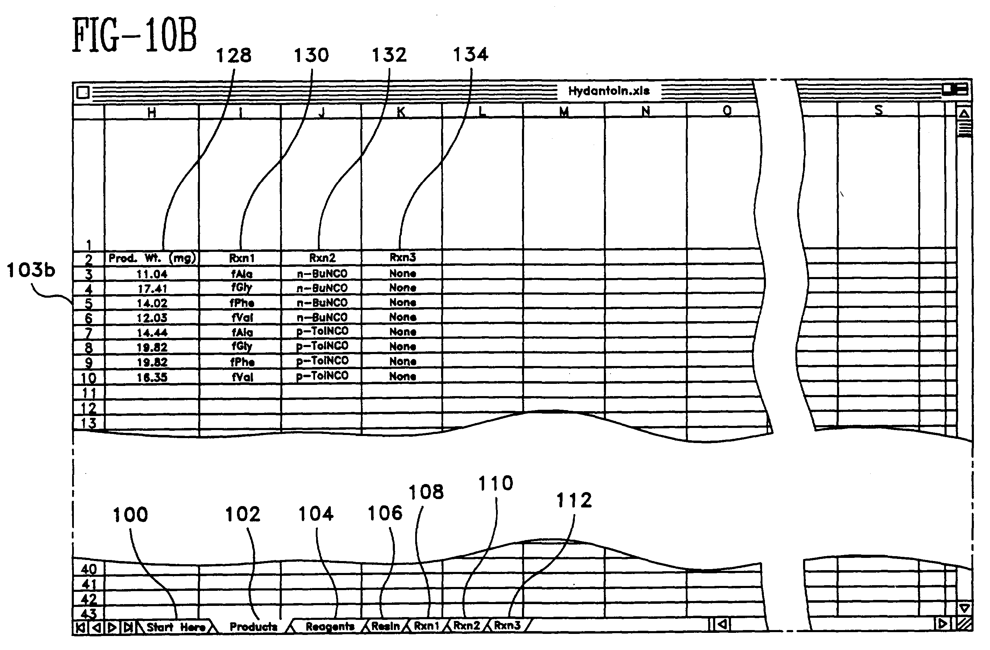

As best shown in Figures 10a and 10b, the Product worksheets 103a, 103b of the preferred embodiment enables entry and listing of the product name to be defined at each PIN. In the eight PIN array shown, the worksheet also provides the listing of reagents R1 and R2 at 118 and 120 and the product strings 122 identifying the process steps that are to be performed, for example, the three process steps identified, when Creating New Array 94 has been selected for initializing an array. In addition, the following data is determined: the molecular weight 124 of the product identified by the user, the molecular formula 126 of the product entered, and the theoretical product weight 128, if 100% of the reaction occurs. In addition, a separate listing of each of the building blocks used in the first 130, second 132 and third 134 chemical reactions to occur in each step of the process creating the product is recorded (this is shown in Figure 10b which depicts spreadsheet 103b which is the second half of spreadsheet 103a). The parsing of product strings, sorting of product strings and the creation of product strings can be accessed by graphic buttons 140, 142 and 144 on the Product spreadsheet 103a, as shown in Figure 10a.

The product strings must be entered into the system to relate a specific product to the building blocks used to create it. The codes for each building block are concatenated into a string of characters in the order they would appear in the synthetic sequence. Individual building blocks are separated by colons. As explained above, if building blocks "A", "B", "C", for example, are to be incorporated into a final product in a three-step synthetic transformation, the product string would be A:B:C. If no building block is utilized in the last step (e.g., the removal of a protecting group or the cleavage of a product from the supporting resin) the word "None" is substituted (A:B:None). If two building blocks are introduced in a single step, the individual components are separated by a comma (e.g., A,B:C:D).

By selecting the "Create Product Strings" button 144 on the "Products" spreadsheet 103a, another dialogue box is displayed. The user selects the "Product Name" on the dropdown list to display the names of the products previously entered in Enter Products 86. The product string created in this dialogue box will be entered into the appropriate cell in the "Product String" column. This dialogue box is the manual alternative to product string construction. The product string is then created by sequentially selecting the building blocks shown in a scrolling list box in the dialogue box. Product strings can also be transferred from a design module to the Reaction Workbook.

Selecting the next building block concatenates it to the product string. This interactive process is continued until all the building blocks have been selected for the product. Selecting a "Save" button in the dialogue box, enters the product string into the "Products" spreadsheet. The next product name is then selected and the process is repeated until product strings have been created for all of the products. The "R×n1", "R×n2", and "R×n3" columns will be populated in the next step when the individual building blocks are parsed from the product strings.

Selecting the "Parse Product Strings" button 140 on the "Products" spreadsheet 103a creates the data shown in spreadsheet 103b of Figure 10b. The program associates each building block with a reaction step (e.g., "R×n1") and enters it in the appropriate cell. Thus the building block "fGly" would be used in the first step of the synthesis for the product specified in row 4 of column I.

The Reaction Workbook also contains a program which will order the reagents in an array. Selecting the "Sort Product Strings" button 142 on the "Product" spreadsheet 103a will organize building blocks by a series of sorts in the parsed building block columns. The algorithm orders the building blocks based on the number of unique building blocks in each reaction and their name. This process is useful for optimizing the placements of the reagents by a liquid handling robot or simplifying the order during manual addition. It is also possible to integrate the functions in parsing and sorting product strings into the "Product Information" dialogue box.

A multiple simultaneous synthesis can be originated by placement of a resin in each PIN in the array 56. Accordingly, the process for Entering Resin Parameters 88 is shown in Figure 6. When entering data about a solid phase organic synthesis, as shown in this example, the end user must describe the resin's characteristics to the workbook. Clicking on the "Resin Parameters" button on the main screen will display the dialogue box. Depending on the size of the PIN array, the Resin Parameters dialogue box will show a corresponding number of fields. The user may either enter the individual weights of the resin used in each PIN or may enter an estimated average weight of the resin in each PIN. It is possible to toggle between these two options by selecting one of the two buttons in an "Average Resin Weight" box. Selecting the "Enter Individual Pin Weights" button activates the data fields for data entry. When an average value has been entered, the individual fields are grayed out indicating that data may not be entered into them, while the values displayed are copied from the "Avg. Resin Wt." field. Data about the loading factor of the resin used is also entered. Selecting the "OK" button enters this data into the Resin spreadsheet. When individual weights are entered, the average weight is calculated and stored. The theoretical product yield based on that average weight is also stored in the Resin worksheet accessible at tab 106.

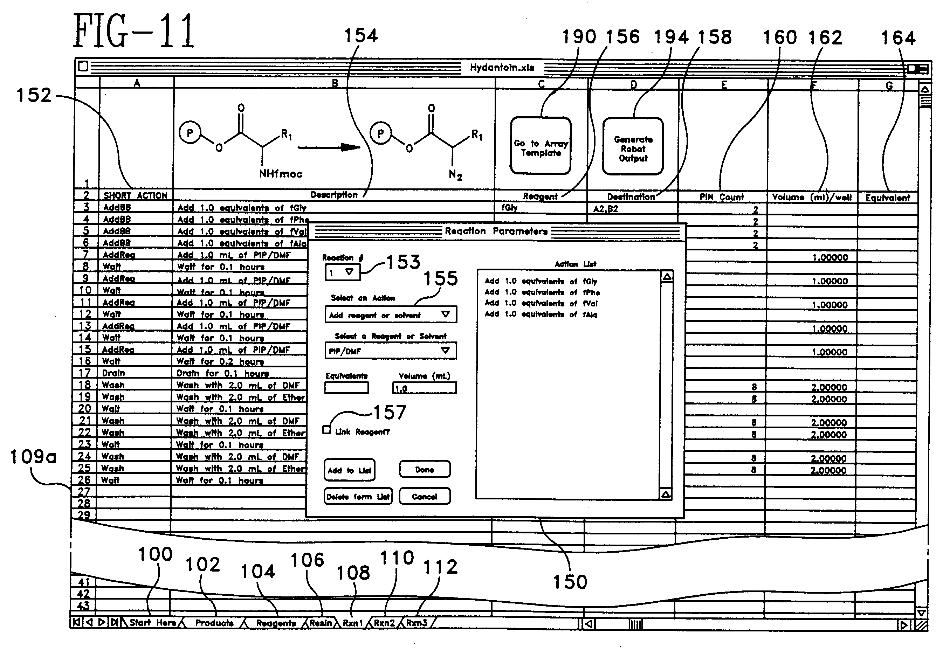

The Enter Reaction Parameters function 90 of the preferred embodiment is shown in Figure 7. The dialogue box 150 for selecting reaction parameters is shown displayed over the first reaction spreadsheet 109a in Figure 11. In addition, the spreadsheet at tab 108 displays a series of short actions in abbreviated form at 152 and in expanded form at 154 relative to each product string reaction, for example, the repeated addition and stirring of a particular reagent until a predetermined amount of reagent has been introduced to a PIN in the reaction vessel at a particular location. In addition to identification of the Short Action 152 and the detailed Description 154 of the short action step 152, the spreadsheet 109a also displays the Reagent employed 156, the PIN Destinations 158, the total number of PINs 160 ("PIN count") involved in the step, a total Volume 162 of solution per reaction well, and the Equivalents 164 (parts required per complete reaction) of the reagents to be added. The temperature, time and reagent weight are also entered or provided by transport from another module.

The next step in the process of entering reaction data is to provide the Reaction Workbook with the details of the actual synthetic procedure. Selecting "Reaction Parameters" from the menu results in display of dialogue box 150 shown in Figure 11. If the "Reaction Parameter" button 98 on the "Start Here" spreadsheet 100 were selected, the same dialogue box would appear but on top of that spreadsheet 93. The first step in the "Reaction Parameters" dialogue box 150 is to select the number of the reaction step into which information will be entered. This is accomplished by selecting or clicking on the "Reaction #" dropdown list 153 then selecting it from the displayed choices. The next step is to select the desired action from the "Select an Action" dropdown list 155. Other dropdown lists and data entry fields are keyed to the action selected. For example, if "Add to List" is selected, a dropdown list for selecting the building block to be added and a field to enter the number of equivalents of the building block will appear. These fields would not be displayed if, for example, "Wait for a specified time" were chosen as building blocks and equivalents are not relevant to a pause in the reaction procedure. All fields in the "Reaction Parameters" dialogue box 150 are context sensitive in this manner. The next action would be to select a building block from the "Select a Building Block" dropdown list.

In Figure 11 the result of entering three additional building blocks can be seen, The dialogue box 150 as shown is configured to add 1.0 ml of a 25% piperidine/DMF solution. The available fields in the dialogue box are different than the previous box as additional fields are pertinent to the "Add reagent or solvent" selection. The "Link Reagent" check box 157 allows the reagent which is to be added to be linked to a previous reagent. In other words, it will be added only to the same PINs as the linked reagent or building block. Figure 11 shows the entire sequence of steps for the first step of the reaction sequence.

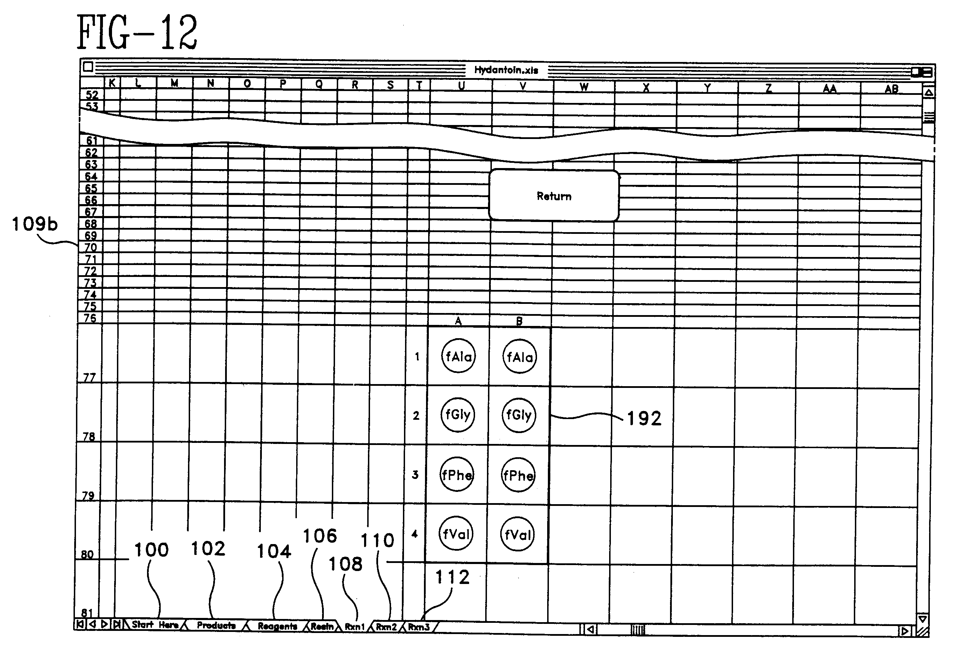

This spreadsheet screen also provides access to an "Go to Array Template" graphic button 190. The actuation of button 190 provides an array template identification of the reagent being introduced during the reaction in accordance with a destination map 192 as shown in Figure 12. Such an array map 192 can be printed and placed on top of a reactor apparatus array to guide manual deposit of reagents.

The transfer of data from the core module 30 to guide the robot controller's preparation of commands to the liquid handling robot 18 occurs by actuating "Generate Robot Output" graphic button 194. The reaction workbook plus random access memory (RAM) transforms the chemical location and identification information into guides for controller generated movement commands at interface 14 for the LHR 18. For example, a liquid handling robot manipulator 24 will be displaced for retrieving a selected reagent from the supply 26 (Figure 1) and delivering it to each of the PINS in the array 56 as identified by the destination map 192 developed from the design module data or instructions received from the system user.

In addition to the development and insertion of ingredients that can be accomplished through the liquid handling robot 18, it will be understood that additional automation can be used in the process of multiple parallel synthesis, that is, the multiple simultaneous synthesis (or parallel synthesis) utilizing two or more reactor apparatus. For example, equipment for handling multiple reactor apparatus 28, including pick and place robots 180 such as an ADEPT system with a robotic controller 182, can be controlled and scheduled by event scheduler 22 in conjunction with operation of the liquid handling robot 18. (This is shown in Figure 1.) In this manner, multiple parallel synthesis can be performed in multiple reactor apparatus 28 and simultaneously handled to perform different simultaneous operations in both reactor apparatus. Likewise, the function of additional peripheral equipment such as apparatus to wash the reaction wells of one reactor apparatus, can occur while developing syntheses in another reactor apparatus. The event scheduler 22 may be similarly reconfigured similar to the reaction workbook and may also include a program with graphic user interface such as Lab View by National Instruments, Austin, Texas.

The present invention has many uses for many different applications. Although the invention is described above with particular reference to its use in identifying new drug candidates, the invention can also be used, for example, to screen for veterinary agents, other pharmaceutical agents, agricultural agents, diagnostic agents, and the like. The invention has possible use in any industry which uses chemical synthesis and reactions to develop and/or screen new chemical products. As other alternatives, the invention can be used for the optimization of chemical reactions, such as reaction yields or reaction times, for statistical experimental design strategies, and for quantitative structure activity relationship strategies.

Having thus described the present invention, many modifications thereto will become apparent to those skilled in the art to which it pertains without departing from the scope and spirit of the present invention as defined in the appended claims. For example, the present invention can be employed with solution-based chemical transformation as well as solid- based chemical transformations such as the resin-based transformation of the preferred embodiment.

## Claims

1. A method for conducting multiple simultaneous synthesis in a plurality of reaction vessels, said method comprising the steps of:
a) creating an array of chemical transformations in locations corresponding to each of said reaction vessels;
b) selecting products to be developed in said reaction vessels;
c) assigning locations for each product in said array;
d) selecting constituents for developing each product;
e) entering data of said selected products, assigned locations and selected constituents as input to a processor; and
f) transforming said entered data to designation data that guides logical control of an apparatus interacting with physical positions of said reaction vessels.

2. The method as set forth in Claim 1 further comprising the step of identifying a product string.

3. The method as set forth in Claim 1 further comprising the step of positioning said reaction vessels in a reactor apparatus.

4. The method as set forth in Claim 1, wherein said interacting apparatus is a liquid handling robot.

5. The method as set forth in Claim 1 further comprising the step of positioning said reaction vessels in a plurality of reactor apparatus and said method of Claim 1 is performed substantially concurrently on each of said reactor apparatus.

6. The method as set forth in Claim 1, wherein said method further comprises the step of automating data acquisition and control of peripheral equipment.

7. The method as set forth in Claim 6, wherein said peripheral equipment comprises at least a liquid handling robot.

8. The method as set forth in Claim 1, wherein said method comprises mapping and arrangement of constituent locations for at least one step in said chemical transformations.

9. The method as set forth in Claim 8, wherein said method comprises mapping an arrangement of constituent locations for each step in said chemical transformations.

10. The method as set forth in Claim 1, wherein said step of creating an array comprises inputting a predetermined number of steps to be performed in said chemical transformations.

11. The method as set forth in Claim 1, wherein said step of creating an array comprises inputting an identification number corresponding to each of said reaction vessels.

12. The method as set forth in Claim 1, wherein said step of selecting products comprises inputting resin-based parameters and said synthesis is performed on solid supports.

13. The method as set forth in Claim 1, wherein said step of selecting products comprises inputting solution-based parameters and said synthesis is performed in accordance with solution-based technology.

14. The method as set forth in Claim 1, wherein said method comprises automating operation of peripheral equipment and introducing reagents to said reaction vessels.

15. The method as set forth in Claim 1, wherein each of said reaction vessels comprises a gas dispersion tube and a reaction well.

16. A method for conducting multiple simultaneous synthesis in a plurality of reaction vessels in a reactor apparatus, each of said reaction vessels comprising a PIN and a reaction well, said method comprising the steps of:
a) creating an array of chemical transformations in locations corresponding to each of said reaction vessels;
b) selecting products to be developed in each of said reaction vessels;
c) assigning locations for each product in said array;
d) selecting constituents for developing each product;
e) entering data of said selected products, assigned locations and selected constituents as input to a processor; and
f) transforming said entered data to destination data that guides logical control of an apparatus interacting with physical positions of said reaction vessels.

17. The method as set forth in Claim 16 and further comprising identifying a product string.

18. The method as set forth in Claim 16, wherein said method comprises automating operation of peripheral equipment.

19. The method as set forth in Claim 18 further comprising introducing reagents to said reaction vessels by said peripheral equipment.

20. The method as set forth in Claim 19, wherein said reagents are grouped for introduction to a plurality of selected reaction vessels.

21. The method as set forth in Claim 16, wherein said method comprises mapping and arrangement of constituent locations for at least one step in a chemical transformation.

22. The method as set forth in Claim 21, wherein said method comprises mapping an arrangement of constituent locations for each step in a chemical transformation.

23. The method as set forth in Claim 16, wherein said step of creating an array comprises inputting a predetermined number of steps to be performed in said chemical transformations.

24. The method as set forth in Claim 16, wherein said step of creating an array comprises inputting an identification number corresponding to each of a plurality of wells.

25. The method as set forth in Claim 16, wherein said selecting products step comprises inputting resin-based parameters.

26. The method as set forth in Claim 16, wherein said selecting products step comprises inputting solution-based parameters.

27. The method as set forth in Claim 16 further comprising the conducting of said method for multiple parallel synthesis with a plurality of reactor apparatus, each reactor apparatus having a plurality of reaction vessels.

28. A system for developing a multiple simultaneous synthesis in a reactor apparatus with a plurality of reaction vessels therein, comprising:
a reaction workbook for introducing multiple product development processes, including a graphical user interface for inputting location information corresponding to an array of the reaction vessels, selecting products to be developed in each reaction vessel by defining a chemical transformation, and selecting locations for each chemical transformation in said array, said workbook developing destination data for each said reaction vessel; and
a peripheral equipment control for displacing a manipulator relative to said plurality of reaction vessels as guided by said destination data.

29. The invention as defined in Claim 28, wherein said peripheral equipment control comprises a liquid handling robot control.

30. The invention as defined in Claim 28, wherein said peripheral equipment control comprises a map of constituent locations for at least one step in said chemical transformation.

31. The invention as defined in Claim 30, wherein said peripheral equipment control comprises a map of constituent locations for each step in said chemical transformation.
